# EUROPEAN PATENT APPLICATION

(11) **EP 4 836 203 A1**
(43) Date of publication of application: **04.11.2026**
(21) Application number: 26174761.2
(22) Date of filing: 27.04.2026
(51) Int. Cl.: H01R 13/641, H01R 13/66, H01R 43/26

(54) **A CONNECTOR SYSTEM WITH ASSEMBLY DETECTION VIA RADIO FREQUENCY IDENTIFICATION**

(30) Priority: 29.04.2025 FR 2504522
(71) Applicant: TE Connectivity Solutions GmbH, 8200 Schaffhausen (CH)
(72) Inventor: CAMARA, Cathérine, 8200 Schaffhausen (CH); ROUILLARD, Xavier, 8200 Schaffhausen (CH); DELESTRE, Quentin, 8200 Schaffhausen (CH); LORD, Steven, 8200 Schaffhausen (CH); JODON DE VILLEROCHE, Francois, 8200 Schaffhausen (CH)
(74) Representative: Grünecker Patent- und Rechtsanwälte PartG mbB

(57) **Abstract**

The present invention relates to a connector system (1, 2) with assembly detection via radio frequency identification (RFID). The system comprises at least a first connector (1) and a second connector (2), capable of being assembled with the first connector (1). The first connector (1) comprises an RFID circuit (33) including an open antenna pattern (35) having at least two conductive strips (37, 39) electrically separated from each other. The second connector (2) comprises a conductive member (28) that has at least two distinct electrically-conductive arms (48, 50). Each arm (48, 50) is, respectively, configured to establish electrical contact with one of the conductive strips (37, 39) of the antenna pattern (35) when the connectors (1, 2) are in an assembled position, such that, in said assembled position, the conductive member (28) electrically closes the antenna pattern (35).

## Description

### Technical field

The present invention relates to a connector system that makes it possible to detect when the connectors are assembled, in particular, by means of radio frequency identification (RFID). It applies, in particular, to electrical connectors in the automotive sector, as well as in the aeronautical field, or in industry in general.

### Technical context

In many industrial fields, it is essential to ensure that electrical connectors are properly assembled. A common problem is partial assembly: the connectors may appear to be in place visually or tactilely, when they are not fully coupled. Such a situation may result in contact faults, breakdowns, or non-conformities in production.

To limit this risk, certain mechanical solutions have been implemented, such as snap-fitting systems or CPA-type components (CPA for "Connector Position Assurance"). However, these devices have limitations, in particular, in a stressed or noisy environment, and do not make it possible to guarantee or record the actual assembly state.

The need for a reliable means to verify connector assembly is particularly critical in high-power/high-voltage applications (or HP/HV, High Power / High Voltage connectors), wherein increased safety and traceability requirements apply.

Solutions call upon integrating an RFID circuit in connector systems, making contactless detection possible. Within these known systems, an RFID circuit is inactive or undetectable as long as a conductive element does not close an antenna circuit. This closure is achieved only when the connectors are coupled, thus automatically making it possible to signal that the system has been completely assembled.

However, this approach has several limitations: the electrical contact within the antenna may be unstable or sensitive to mechanical tolerances as well as to mechanical stresses induced by the environment, such as vibrations. Furthermore, designing such an assembly may become complex, expensive, or difficult to integrate into automated production lines.

Therefore, it is necessary to improve the RFID systems integrated into electrical connectors, making assembly detection reliable, robust and easy to implement.

### Description of the invention

The aim of the invention is fulfilled by means of a connector system with assembly detection via radio frequency identification (RFID). The system in accordance with the present invention may be a connector system for a motor vehicle. It may also be used in other industrial sectors requiring reliable assembly detection, such as: aeronautics, rail, automated industrial equipment, high-power or high-voltage electrical installations, electric vehicle charging systems, medical applications including critical connections or cabling systems for servers or data centres. The system according to the present invention comprises at least: a first connector comprising an RFID circuit comprising an open antenna pattern, said antenna pattern comprising at least two electrically-separated conductive strips, a second connector, that is capable of being assembled with the first connector, and comprising a conductive member, the conductive member having at least two distinct electrically-conductive arms, and each arm of the conductive member is, respectively, configured to establish electrical contact with one of the conductive pads of the antenna pattern when the first connector and the second connector are in an assembled position, such that, in said assembled position, the conductive member of the second connector electrically closes the antenna pattern of the first connector.

The two distinct conductive arms make it possible to ensure independent and localised mechanical support on each conductive strip. Thus, the closure the antenna pattern by means of two distinct arms makes it possible to ensure a greater level of tolerance to any vibrations and misalignment, in particular, in comparison with a single conductor bar for connecting the two conductor pads. This makes the electrical contact more reliable. Therefore, the robustness of the RFID signal may be improved, including in an environment subjected to vibrations.

Furthermore, by distributing the antenna pattern and its closure means across two different connectors, it is possible to prevent only one of the connectors from being able to activate the RFID circuit. In fact, the antenna pattern is arranged on the first connector. The closure means for the antenna pattern is arranged on the second connector. The RFID circuit may only be closed when the two connectors are assembled. The first connector, by itself, does not make it possible to close the circuit. The second connector, by itself, also does not make it possible to close the circuit. Thus, it is impossible for the RFID circuit to be activated, even unintentionally, until the connectors are fully assembled. This helps to ensure that assembly detection is more reliable.

The RFID circuit acts as a contactless identification device for transmitting information via radio frequency. The antenna of the RFID circuit may be configured to pick up an electromagnetic signal emitted by an RFID reader. This signal, often referred to as the inquiry signal, may be used to activate the RFID circuit.

The RFID circuit may comprise a micro-chip. The micro-chip may contain an identification code.

The RFID circuit may be passive. In this case, the RFID circuit does not include an autonomous power source. The energy harnessed by the antenna may be used to power the micro-chip.

When the RFID circuit is powered, the micro-chip may modulate the signal returned to the RFID reader, for example, to transmit the identification code. The RFID reader may be equipped with a transceiver capable of detecting and analysing the responses of the RFID circuit located within its field area.

Within the scope of the present invention, the closure of the antenna pattern makes it possible to ensure that the RFID circuit is operational and may then be detected by an RFID reader to signal that the connectors are assembled.

The conductive member may act as a shunt between the conductive strips of the antenna pattern. The conductive member may be made in one piece. The conductive member may be made of conductive metal, such as a copper alloy or conductive stainless steel. The arms of the conductive member may be flexible. This flexibility makes elastic deformation possible when assembling connectors.

In accordance with one embodiment, the arms of the conductive member may be, respectively, configured to be elastically bent by assembling the first connector with the second connector, such that, in the assembled position, the arms of the conductive member exert pressure against the respective conductive strips of the antenna pattern. This pressure makes it possible to maintain reliable electrical contact, even in a demanding environment, in particular, in the presence of vibrations. The flexibility of the arms makes it possible to compensate for any misalignments or relative movements between the connectors. Moreover, it helps to maintain the closure of the RFID circuit when the system is subjected to mechanical stresses, such as vibrations.

In accordance with one embodiment, each arm of the conductive member may have a curved or folded blade-like shape. This shape promotes elastic deformation of the arm when assembling the connectors. It makes it possible for the arms to be progressively deformed when coupling the connectors. It also makes it possible to concentrate the contact force on the corresponding conductive strip. The curved or folded geometry helps to improve the mechanical stability of the contact during operation, in particular, in the presence of dynamic stresses such as vibrations.

In accordance with one embodiment, each arm of the conductive member may comprise, at a region intended to come into contact, in the assembled position, with one of the conductive strips of the antenna pattern, a protruding relief, in particular, a boss. This relief helps to provide a defined contact surface and enhances localised pressure.

The first connector may be configured to be inserted, along an insertion direction, into the second connector.

In accordance with one embodiment, the conductive member may be mounted to the second connector such that the arms of the conductive member may protrude into the inside of the second connector. This arrangement makes it possible for the arms to mechanically interact with the first connector at the time of assembly. It makes it possible for the arms to be elastically deformed when coupling the connectors. The conductive member may remain protected in the internal volume of the second connector while performing its closure function.

In accordance with one embodiment, the conductive member may comprise a fixing portion, in particular, in the form of a plate. The arms of the conductive member may extend from the fixing portion. The fixing portion may be inserted into a housing, in particular, in the form of a slot, provided in the second connector. This configuration makes it possible to mount the conductive element in a way that is simple, stable and reproducible. Fixing by inserting into a housing, such as a slot, provides secure retention whilst simplifying assembly. The fixing portion may be inserted into the housing along the insertion direction.

In accordance with one embodiment, the fixing portion may comprise at least one protuberance forming a mechanical retaining means in the housing of the second connector. The protrusion may be configured to co-operate with an edge of the housing or a notch of the housing. It prevents any unwanted axial movement of the conductive member once installed. It also makes it possible to provide secure retention without requiring any screws or glue.

In accordance with one embodiment, the RFID circuit may be arranged on an external surface of the first connector. This arrangement facilitates manufacturing the circuit and its visual or functional inspection. It also makes it possible to reduce the internal space required by the connector. In particular, the first connector may comprise an enclosure made of an insulating material, such as a moulded plastic, on which the RFID circuit is arranged. The enclosure may be designed to receive a conductive element, such as a connector, a terminal, or an electrical conductor. Similarly, the second connector may comprise an enclosure made of an insulating material, such as a moulded plastic, and that is designed to receive a mating conductive element, such as a connector, a terminal or an electrical conductor.

In accordance with one embodiment, the RFID circuit may be produced by etching, chemical etching, conductive ink deposition, ink jet printing or by a conductive film, in particular, by a self-adhesive conductive film. These methods make it possible to manufacture the antenna at a low cost and with high geometric precision. These methods are compatible with plastic materials, in particular, used for the enclosure design of the first connector. The use of an RFID tag in self-adhesive film or paper makes it possible to ensure rapid integration, without modifying the mould or any specific over-moulding. It also makes it possible to apply the tag at the end of the production line or as a retrofit. This support type is lightweight and space-saving.

In accordance with one embodiment, the first connector and the second connector may, respectively, comprise mechanical locking means which may be arranged such that the coupling of the mechanical locking means may be performed without any physical contact between said mechanical locking means and the conductive member. The conductive member may be mechanically decoupled from the locking means. This mechanical independence prevents any interference between the locking function and the closure function of the RFID circuit. It also reduces the risk of false detection related to faulty operation.

In accordance with one embodiment, the locking means are, respectively, formed integrally with the connectors, in particular, with an enclosure of the connector by moulding, in particular, by plastic injection. This integration reduces the number of parts and simplifies assembly. It improves the robustness of the locking system and reduces manufacturing costs.

In accordance with one embodiment, the system may be characterised by the absence of any Connection Position Assurance (CPA) element. This absence makes it possible to eliminate any removable components which may be lost or incorrectly mounted. It simplifies the connector design and prevents any assembly errors related to a partially-engaged CPA.

The aim of the present invention is also fulfilled by a method for detecting an assembly between a first connector and a second connector in a connector system with assembly detection via radio frequency identification (RFID). The method comprises the following steps:
a) providing a first connector comprising an RFID circuit comprising an open antenna pattern, said antenna pattern comprising at least two electrically-separated conductive strips;
b) providing a second connector comprising a conductive member including at least two distinct electrically-conductive arms,
c) assembling the first connector with the second connector such that the arms of the conductive member, respectively, establish electrical contact with said conductive strips;
d) activating the RFID circuit in response to an inquiry signal emitted by an RFID reader, and transmitting, via the RFID circuit, a response detectable by the RFID reader, indicating that the connectors are assembled.

The RFID circuit may be activated in accordance with step (d) only if both connectors are effectively connected. Until contact is established between the arms of the conductive member and the conductive strips, the antenna pattern remains open, and the RFID circuit remains inactive.

The process thus makes it possible to remotely verify that the connector system has been assembled correctly. It may be implemented in series to control the assembly state of a plurality of connectors, for example, at the output of the production line.

The assembly step (c) may be performed without any mechanical locking means, such as ramps, interacting with the conductive member. No contact is required between these elements. For example, a locking ramp secured to the first connector may be arranged so as not to come into contact with the conductive member, including during assembly. In the assembled position, the arms of the conductive member may be positioned on either side of said ramp, without any physical contact or mechanical interference. In other words, the conductive member may be mechanically decoupled from the locking means.

The drawings which accompany the invention are incorporated into the description and form an integral part to show several embodiments of the present invention. These drawings, as well as their description, are used to explain the principles of the invention. The aim of the drawings is to show only the preferred and alternative examples of embodiments wherein the invention may be made and used, and must not be interpreted as limiting the invention to only the embodiments shown and described.

Furthermore, several aspects of the embodiments may consist of, individually or according to different combinations, solutions in accordance with the present invention. The embodiments described below may therefore be considered individually or in an arbitrary combination. Other characteristics and advantages will become apparent from the more detailed description that will follow the various embodiments of the invention, as shown in the drawings included, wherein similar reference numerals refer to similar elements.
Figure 1 schematically shows an exploded view of a first connector comprising an RFID circuit, comprising a conductive member;
Figure 2 schematically shows an exploded view of a second connector comprising a conductive member;
Figure 3 schematically shows the conductive member only;
Figure 4 shows a top view of a connector system with assembly detection via RFID, in a non-assembled position;
Figure 5 shows also a top view of the system, in an assembled position;
Figure 6 shows a cross-sectional view of the system, in the non-assembled position;
Figure 7 shows another cross-sectional view of the system, in a partially-assembled position;
Figure 8 shows a cross-sectional view of the system, in the assembled position.

### First connector

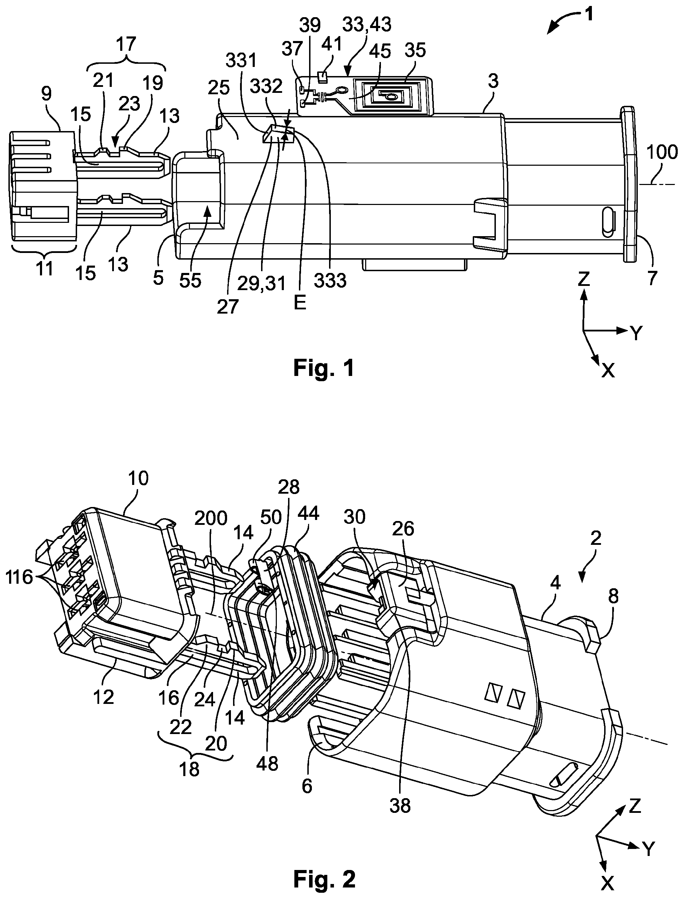

Figure 1 schematically shows an exploded view of a first connector 1. The first connector 1 comprises an enclosure 3. The enclosure 3 may be made of an electrically-insulating material, such as a moulded plastic, in particular, by means of injection moulding. The enclosure 3 extends longitudinally between a first open end 5 and a second open end 7, along a longitudinal axis 100 defined parallel to the axis Y of the Cartesian reference frame shown in Figure 1. In the example shown, the enclosure 3 has a substantially rectangular cross-section. In a variant embodiment not shown, the enclosure 3 may have another cross-sectional shape, such as an oval or circular cross-section. The first open end 5 is provided with a partial cut-out 55 extending longitudinally along the axis Y. This cut-out 55 is arranged on a portion showing substantially half of the cross-section of the enclosure 3.

The first connector 1 is configured to receive electrical contact elements (not shown), especially, pins or terminals, in particular, flat ones, which may be inserted through the second open end 7 of the enclosure 3. In the example shown in Figure 1, the first connector 1 comprises a clip holder 9 (or tab holder 9). The clip holder 9 is an internal structure of the enclosure 3 intended to receive and retain electrical contact elements (not shown) in the enclosure 3. To this end, the clip holder 9 comprises a separation portion 11 of the contacts and locking arms 13, extending longitudinally. These locking arms 13 each comprise a through hole 15. Each locking arm 13 also comprises retaining means 17 making it possible for them to be retained inside of the enclosure 3 of the first connector 1. These retaining means 17 comprise, in this example, a first protrusion 19 in the form of a ramp and a second protrusion 21 forming an abutment. A locking notch 23 is thus defined between these two protrusions 19, 21. These retaining means 17 make it possible to retain the clip holder 9 inside of the enclosure 3. It must be noted that Figure 1 shows an exploded view: in the assembled configuration of the first connector 1, the clip holder 9 is arranged inside the enclosure 3. The clip holder 9 may be made of an electrically-insulating material, such as a moulded plastic, in particular, by injection moulding.

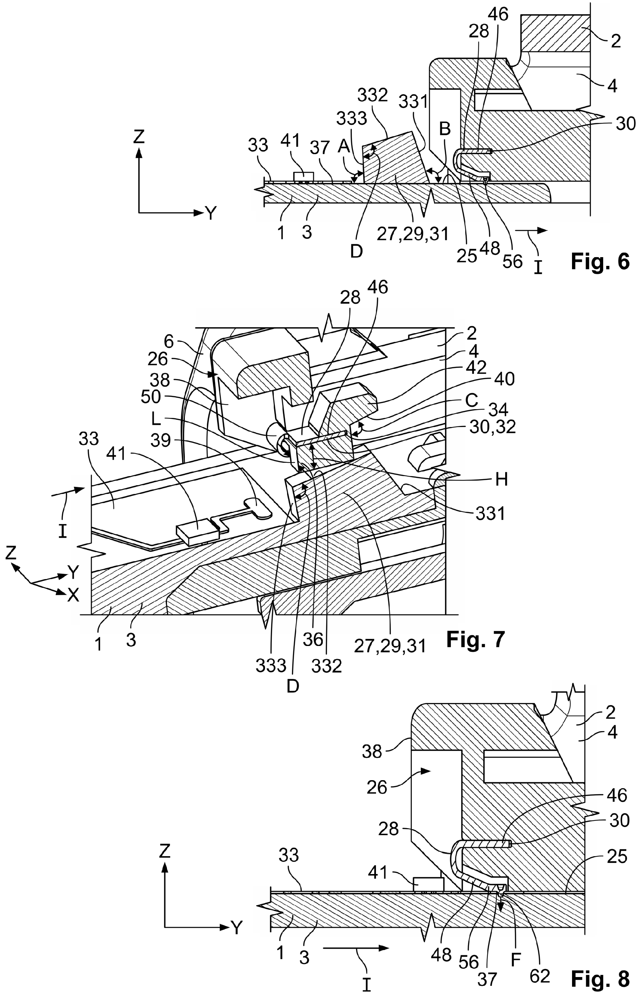

Furthermore, the enclosure 3 comprises, on one of its external faces 25, a mechanical locking means 27. In the example shown in Figure 1, this locking means 27 consists of a protrusion 29 extending substantially perpendicularly to the face 25. This protrusion 29 takes the form of a ramp 31. The ramp 31 is integrally formed with the enclosure 3, in particular, by moulding. The ramp 31 has a thickness, indicated by the reference sign E, adapted to co-operate with a mating locking means of a connector (subsequently referred to as "second connector") intended to be assembled with the first connector. The ramp 31 comprises three slopes 331, 332 and 333, arranged in this order along a direction from the first open end 5 to the second open end 7. The slopes 331, 332, 333 are more visible in Figures 7 and 8. The first slope 331 and the third slope 333 protrude from the external face 25 of the enclosure 3. The second slope 332 connects the first slope 331 to the third slope 333. The first slope 331 is inclined relative to the face 25. The first slope 331 has an increasing inclination in a direction from the first open end 5 towards the second open end 7. The third slope 333 is also inclined relative to the face 25, but with a smaller inclination than that of the first slope 331. By way of example, the third slope 333 forms an angle A (indicated in Figure 6) equal to or less than 90° relative to the face 25, while the first slope 331 forms an angle B (indicated in Figure 6) greater than 90°.

The first connector 1 comprises an RFID circuit 33. The RFID circuit 33 is configured to be arranged on an external surface of the enclosure 3 of the first connector 3. In the example shown in Figure 1, the RFID circuit 33 is arranged on the same external face 25 as that including the locking means 27. The RFID circuit 33 is positioned between the locking means 27 and the second open end 7.

The RFID circuit 33 comprises an antenna pattern 35. The antenna pattern 35 is said to be "open", i.e., it comprises two conductive strips 37 and 39 electrically separated from each other. In the example shown, each conductive strip 37, 39 has a substantially elongated, in particular, oblong shape. The RFID circuit 33 also comprises a micro-chip 41 connected to the antenna pattern 35. Again, it must be noted that Figure 1 shows an exploded view: the micro-chip 41 is not shown in direct contact with the antenna pattern 35, although it is effectively connected to it in the assembled configuration of the first connector 1.

In the example shown, the RFID circuit 33 consists of an RFID tag 43. This RFID tag 43 may comprise a flexible support 45, for example, made of paper, on which the micro-chip 41 and the antenna pattern 35 are printed or arranged. The support 45 may be self-adhesive in order to facilitate fixing the RFID circuit 33 to the external surface 25 of the enclosure 3, in particular, during an automated installation operation at the end of the production line. The RFID tag 43 may also consist of a polymer film, for example, made of polyester, and may incorporate an adhesive on one of its faces. Such a configuration has the advantage of being lightweight, space-saving and easy to implement without modifying the mould of the enclosure 3 of the connector 1.

### Second connector

Figure 2 schematically shows an exploded view of a second connector 2. The second connector 2 is capable of being assembled with the first connector 1.

The second connector 2 comprises an enclosure 4. The enclosure 4 may be made of an electrically-insulating material, such as a moulded plastic, in particular, by means of injection moulding. The enclosure 4 extends longitudinally between a first open end 4 and a second open end 8, along a longitudinal axis 200 defined parallel to the axis Y of the Cartesian reference frame shown in Figure 2. In the example shown, the enclosure 4 has a substantially rectangular cross-section. In a variant embodiment not shown, the enclosure 4 may have another cross-sectional shape, such as an oval or circular cross-section.

The second connector 2 is configured to receive electrical contact elements (not shown), such as pins or terminals, in particular, flat ones, which may be inserted through the second open end 8 of the enclosure 4. In the example shown in Figure 2, the second connector 2 comprises a clip holder 10 (or tab holder 10). The clip holder 10 is an internal structure of the enclosure 4 intended to receive and retain electrical contact elements (not shown). To this end, the clip holder 10 comprises a separation portion 12 of the contacts and locking arms 14, extending longitudinally. The separation portion 12 comprises three individual housings 116 for, respectively, receiving an electrical contact element (not shown). The locking arms 14 each comprise a through hole 16. Each locking arm 14 also comprises retaining means 18 making it possible for them to be retained inside of the enclosure 4 of the second connector 2. These retaining means 18 comprise, in this example, a first protrusion 20 in the form of a ramp and a second protrusion 22 forming an abutment. A locking notch 24 is thus defined between these two protrusions 20, 22. These retaining means 18 make it possible to retain the clip holder 10 inside of the enclosure 4.

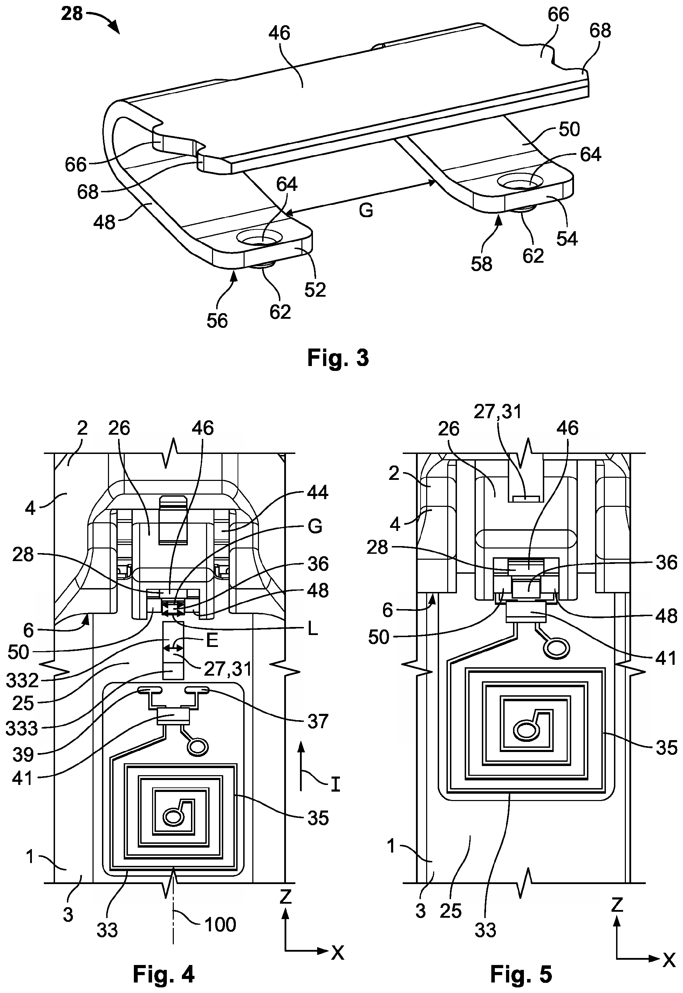

The enclosure 4 of the second connector 2 comprises a receiving body 26 for receiving a conductive member 28. The conductive member 28 is described in detail below, in particular, with reference to Figure 3. The receiving body 26 is made from a single piece with the rest of the enclosure 4. This receiving body 26 defines a housing 30 into which the conductive member 28 may be inserted. As shown in the cross-sectional view in Figure 7, the housing 30 comprises a slot 32. The slot 32 has a closed internal end 34.

As can be seen in Figure 7, the receiving body 26 also comprises a central pad 36. The pad 36 has a substantially rectangular cross-section, in particular, in the planes (XZ) and (XY). The pad 36 extends from the housing 30 towards the inside of the enclosure 4 according to a height H. The height H is defined along the axis Z of the Cartesian reference frame. This pad 36 is dimensioned such that its width L, measured along the axis X of the Cartesian reference frame, corresponds substantially to the spacing between two arms of the conductive member 28. Thus, when the conductive member 28 is mounted to the second connector 2, each arm of the conductive member 28 may extend to either side of the pad 36 without mechanically interacting with it. The arms of the conductive member 28 is described in detail below, with reference to Figure 3.

A cover 38 is arranged at the first open end 6 of the enclosure 4, above the receiving body 26. This cover 38 is made from a single piece with the enclosure 4 and extends overhanging the housing 30, so as to protect the inlet of the housing 30. It thus makes it possible to prevent any accidental contact or unintentional interaction with the conductive member 28 housed in the housing 30.

Furthermore, as shown in Figure 7, a retaining hook 40 is defined between the pad 36 and a shoulder 42 protruding from the receiving body 26. The shoulder 42 extends towards the inside of the enclosure 4, in the direction of the second open end 8. The retaining hook 40 forms an angle C between the pad 36 and the shoulder 42. The angle C is substantially complementary to an angle D defined between the second slope 332 and the third slope 333 of the ramp 31 of the first connector. Thus, in an assembled position of the connectors 1 and 2, the ramp 31 of the first connector 1 may come into abutment against the retaining hook 40 of the second connector 2 along the insertion direction I. This interaction makes it possible to ensure the axial mechanical locking of the first connector 1 with the second connector 2.

However, it must be noted that the present invention is not limited to the locking structure described, in this case, by way of example. The mechanical locking means may take other forms or configurations, provided that they make it possible for the assembled connectors to be retained and locked.

In the example shown, the second connector 2 is a sealed connector. The second connector 2 comprises at least one sealing joint 44. The sealing joint 44 is arranged inside of the enclosure 4. Similarly, the first connector 1 may be a sealed connector and comprise one or more sealing joints. However, the present invention is not limited to these types of connectors and may also be implemented with non-sealed connectors or connectors of any different configuration.

The conductive member 28 of the second connector 2 is described below, in particular, in relation to Figure 3. The conductive member 28 consists of a one-piece metal component, for example, obtained by means of cutting out and folding. The conductive member 28 comprises a fixing portion 46, that, in the example shown, is shaped like a flat plate. The conductive member 28 further comprises at least two distinct, electrically-conductive arms 48, 50. These arms 48, 50 extend from the fixing portion 46, so as to be deployed towards the inside of the second connector 2 when the conductive member 28 is mounted in the housing 30 of the enclosure 4, as shown in the cross-sectional views of Figures 6 and 8.

The arms 48, 50 are spaced from each other by a spacing of width G, as shown in Figure 3. As shown in Figure 4, this width G is slightly greater than the width L of the central pad 36. Thus, during the insertion of the conductive member 28 into the housing 30, the arms 48, 50 may be positioned on either side of the central pad 36.

The arms 48, 50 are, respectively, flexible. Each arm 48, 50 has a folded blade-like shape, in particular, in the form of a letter "U" or in an inverted arc. In the example shown, the arms 48, 50 are folded such that their respective free ends 52, 54 are orientated towards the fixing portion 46. This folded geometry provides the arms 48 and 50 with elastic deformability, making it possible for them to flex when the first connector 1 is assembled with the second connector 2, whilst exerting a return force in the direction of the conductive pads 37 and 39 of the antenna pattern 35. Thus, the arms 48, 50 may adapt to alignment tolerances while ensuring reliable contact. Moreover, the arms 48, 50 make it possible to maintain stable contact even when the connectors 1 and 2 are subjected to mechanical stresses, such as vibrations or shocks, typical of automotive or industrial environments.

Each of the free ends 52, 54 comprises a contact region 56, 58. At this location, each arm 48, 50 is provided with a protruding relief 62, in particular, a boss 62, intended to improve the electrical contact with the corresponding conductive strip 37, 39 of the antenna pattern 35. The boss 62 may be formed by punching, that generates a cavity 64 on the opposite face of the boss 62.

The fixing portion 46 of the conductive member 28 comprises protuberances 66, 68 which form the mechanical retaining means. These protuberances 66, 68 extend in the plane of the plate defining the fixing portion 46, and beyond the lateral limits defined by the arms 48, 50. These protuberances 66, 68 are configured to co-operate with the side walls of the housing 30 of the second connector 2, so as to retain the conductive member 28 in position after insertion.

The fixing portion 46 of the conductive member 28 is inserted along an insertion direction I until it abuts in the housing 30, in particular, in the slot 32, defined in the enclosure 4 of the second connector 2, in particular, until it comes into contact with the closed internal end 34.

The insertion direction I of the conductive member 28 in the enclosure 4 is identical to the insertion direction I of the first connector 1 in the second connector 2.

The conductive member 28 may be easily replaced, if necessary, without modifying the enclosure 4 or the other components of the second connector 2.

The conductive member 28 is mounted in the second connector 2 such that the arms 48, 50 protrude inside of the enclosure 4 of the second connector 2. The arms 48, 50 thus remain protected and capable of coming into contact with the conductive strips 37, 39 during assembly with the first connector 1, that will be described in detail in the following paragraphs.

### Connector system

Figure 4 partially shows a top view of a system formed by the connectors 1 and 2 previously described in an unassembled position, while Figure 5 shows the same system in an assembled position.

Figures 6, 7 and 8 present cross-sectional views along different planes, showing the assembly kinematics of the system. More specifically, Figure 6 shows the system in its unassembled position, Figure 7 shows a partially-assembled position along a different cross-sectional plane, and Figure 8 shows the system in its assembled position, along the same cross-sectional plane as that used in Figure 6.

The first connector 1 is configured to be inserted into the second connector 2, at the first open end 6 of the enclosure 4, along the insertion direction I. In the so-called "non-assembled" position shown by Figure 4, the first connector 1 is only partially inserted into the second connector 2. In this non-assembled position, the enclosure 3 of the first connector 1 is not yet sufficiently engaged for its locking means 27, in particular, the ramp 31, to come into contact with the second connector 2. However, Figure 4 shows that the ramp 31 is already aligned with the central pad 36 of the receiving body 26 of the second connector 2. The thickness E of the ramp 31 of the first connector 1 is substantially equivalent, in particular, identical, to the width L of the central pad 36 of the second connector 2. This dimensional alignment makes it possible to ensure stable support between the ramp 31 and the pad 36, that helps to stabilise the engagement of the connectors 1 and 2 and to properly ensure that they are inserted correctly.

Furthermore, in this non-assembled position, the conductive strips 37 and 39 of the antenna pattern 35 are electrically separated from each other, such that the RFID circuit 33 remains open and inactive. This means that it is not possible to activate the RFID circuit 33 until the connectors 1 and 2 are fully assembled.

In the non-assembled position, as shown by the cross-sectional view in Figure 6, the arms 48, 50 of the conductive member 28 are elastically flexed due to contact with the external face 25 of the enclosure 3 of the first connector 1. The contact region 56 of the arm 48 (respectively, the contact region 58 of the arm 50, that is not visible in Figure 6) comes to bear against the external face 25 of the enclosure 3 of the first connector 1. This bearing creates a contact between the conductive member 28 and the first connector 1 outside of the conductive strips 37 and 39 of the antenna pattern 35. Thus, in the non-assembled position, in which the first connector 1 may be partially inserted into the second connector 2 as shown in Figures 4 and 6, no electrical contact is established between the conductive member 28 and the conductive strips 37, 39 of the antenna pattern 35.

As shown in Figure 7, as the first connector 1 continues to be inserted into the second connector 2 in the insertion direction I, the slope 331 of the ramp 31 gradually raises the central pad 36 of the second connector 2. This raising is then guided by the slope 332 of the ramp 31, until the central pad 36 reaches the slope 333 of the ramp 11, wherein the retaining hook 40 of the housing 4 is interlocked with the protrusion 29 of the housing 3 forming the ramp 31. This interlocking is made possible by the complementary nature of the angles C (of the retaining hook 40) and D (formed between the slopes 332 and 333). This interlocking effects an axial locking of the connector system 1 and 2, i.e. in a direction opposite to the insertion direction I. This locking is performed without any physical contact or mechanical interaction with the conductive member 28. The arms 48 and 50 of the conductive member 28 are therefore not stressed during this operation. This results in mechanical decoupling between the locking mechanism and the RFID detection.

When the assembled position is reached, as shown in Figure 5 (top view), each arm 48, 50 of the conductive member 28 then comes into electrical contact, respectively, with one of the conductive strips 37, 39 of the antenna pattern 35. The conductive element 28 thus ensures that the antenna pattern 35 is electrically closed, making it possible to activate the RFID circuit 33. As can be seen in Figure 8 (cross-sectional view), the contact regions 56, 58 of the conductive member 28 exert pressure against the respective conductive strips 37, 39 of the antenna pattern 35, in particular, via the bosses 62 which generate a force F directed towards the inside of the enclosure 4 along the axis Z.
The configuration of the conductive member 28 thus makes it possible to ensure reliable contact, including in the presence of vibrations or mechanical clearance, in particular, because the flexible arms 48, 50 ensure that the RFID circuit 33 remains closed and, therefore, that RFID detection is reliable.

Once the antenna pattern 35 is closed by the conductive member 28, the RFID circuit 33 becomes capable of interacting with an external RFID reader (not shown in the figures). Such an RFID reader may emit an inquiry signal, generating an electromagnetic field within the environment of the connector system 1 and 2.

When the connectors 1 and 2 are in the assembled position, the arms 48 and 50 of the conductive member 28 establish respective electrical contact with the conductive pads 37 and 39, thus electrically closing the antenna pattern 35. In this closed configuration, the antenna pattern 35 may pick up the electromagnetic field emitted by the RFID reader. The energy thus received makes it possible to activate the micro-chip 41, electrically connected to said pattern 35. Once activated, the micro-chip 41 transmits an encoded signal via the antenna pattern 35. This signal is then picked up by the RFID reader, making it possible to remotely confirm that the connectors 1 and 2 are correctly assembled.

Conversely, if the connectors 1 and 2 are not in the assembled position, for example, in the event that the assembly is incomplete or there is a fault in the contact between the arms 48, 50 and the conductive pads 37, 39, the antenna pattern 35 remains open. In this open configuration, the micro-chip 41 cannot be activated, and no signal is transmitted to the RFID reader. This prevents any assembled state from being incorrectly detected.

The connector system 1, 2 as well as the associated detection method therefore make it possible to reliably and contactlessly verify the assembly state. This detection may be implemented at the end of the production line, for quality control, or integrated into an embedded system in industrial, automotive or aeronautical environments, in order to ensure that the connections are traceable and safe.

List of reference signs:
1: first connector
2: second connector
3: enclosure of the first connector
4: enclosure of the second connector
5, 6: first open end of the enclosure
7, 8: second open end of the enclosure
9, 10: clip holder (or tab holder)
11, 12: contact separation portion of the clip holder
13, 14: locking arm of the clip holder
15, 16: through hole of the locking arm
17, 18: retaining means of the locking arms
19, 20: first protrusion in the form of a ramp
21, 22: second protrusion forming an abutment
23, 24: locking notch
25: external face of enclosure 3
26: receiving body for the conductive member
27: mechanical locking means of the first connector
28: conductive member
29: protrusion
30: housing for the conductive member
31: ramp
32: slot of the housing
33: RFID circuit
34: closed internal end of the slot
35: antenna pattern
36: central pad
37, 39: conductive strips of the antenna pattern
38: protective cover
40: retaining hook
41: micro-chip of the RFID circuit
42: shoulder
43: RFID tag
44: sealing joint
45: flexible support
46: fixing portion of the conductive member
48, 50: arm of the conductive member
52, 54: free ends of the arms
55: cut-out
56, 58: contact regions of the arms
60: contact surfaces of the arms
62: boss (protruding relief)
64: cavity opposite the boss
66, 68: mechanical retaining protuberances
100: longitudinal axis of the system
331, 332, 333: slopes of the ramp
A, B, C, D: angles
E: thickness of the ramp
G: width between the arms of the conductive member
H: height of the central pad
I: insertion direction
L: width of the central pad

## Claims

1. A connector system (1, 2) with assembly detection via radio frequency identification (RFID) comprising at least:
- a first connector (1) comprising an **RFID** circuit (33) comprising an open antenna pattern (35), said antenna pattern (35) comprising at least two electrically-separated conductive strips (37, 39),
- a second connector (2), that is capable of being assembled with the first connector (1), and comprising a conductive member (28),
the conductive member (28) having at least two distinct electrically-conductive arms (48, 50), and each arm (48, 50) of the conductive member (28) is, respectively, configured to establish electrical contact with one of the conductive pads (37, 39) of the antenna pattern (35) when the first connector (1) and the second connector (2) are in an assembled position,
such that, in said assembled position, the conductive member (28) of the second connector (2) electrically closes the antenna pattern (35) of the first connector (1).

2. The system according to claim 1, wherein the arms (48, 50) of the conductive member (28) are, respectively, configured to be elastically bent by the assembly of the first connector (1) with the second connector (2), such that, in the assembled position, the arms (48, 50) of the conductive member (28) exert pressure against the respective conductive strips (37, 39) of the antenna pattern (35).

3. The system according to claim 1 or 2, wherein each arm (48, 50) of the conductive member (28) has a curved or folded blade-like shape.

4. The system according to any one of the preceding claims, wherein each arm (48, 50) of the conductive member (28) comprises, at a region (56, 58) intended to come into contact, in the assembled position, with one of the conductive strips (37, 39) of the antenna pattern (35), a protruding relief, in particular, a boss.

5. The system according to any one of the preceding claims, wherein the conductive member (28) is mounted to the second connector (2) such that the arms (48, 50) of the conductive member (28) protrude into the inside of the second connector (2).

6. The system according to any one of the preceding claims, wherein the conductive member (28) comprises a fixing portion (46), in particular, in the form of a plate, the arms (48, 50) of the conductive member (28) extending from the fixing portion (46), and
the fixing portion (46) is inserted into a housing (30), in particular, in the form of a slot (32), provided in the second connector (2).

7. The system according to claim 6, wherein the fixing portion (46) comprises at least one protuberance (66, 68) forming a mechanical retaining means in the housing (30) of the second connector (2).

8. The system according to any one of the preceding claims, wherein the RFID circuit (33) is arranged on an external surface (25) of the first connector (1).

9. The system according to any one of the preceding claims, wherein the RFID circuit (33) is produced by etching, chemical etching, conductive ink deposition, ink-jet printing or by a conductive film, in particular, by a self-adhesive conductive film.

10. The system according to any one of the preceding claims, wherein the first connector (1) and the second connector (2), respectively, comprise mechanical locking means (27, 40) which are arranged such that,
the coupling of the mechanical locking means (27, 40) is performed without any physical contact between said mechanical locking means (27, 40) and the conductive member (28).

11. A method for detecting an assembly between a first connector (1) and a second connector (2) in a connector system with assembly detection via radio frequency identification (RFID), said method comprising the steps of:
a) providing a first connector (1) comprising an RFID circuit (33) including an open antenna pattern (35), said antenna pattern (35) comprising at least two electrically-separated conductive strips (37, 39);
b) providing a second connector (2) comprising a conductive member (28) comprising at least two distinct electrically-conductive arms (48, 50),
c) assembling the first connector (1) with the second connector (2) such that the arms (48, 50) of the conductive member (28), respectively, establish electrical contact with said conductive strips (37, 39);
d) activating the RFID circuit (33) in response to an inquiry signal emitted by an RFID reader and transmitting, via the RFID circuit (33), a response detectable by the RFID reader, indicating that the connectors (1, 2) are assembled.
